# FASCICULE DE BREVET EUROPEEN

(11) **EP 1 074 397 B1**
(45) Date de publication et mention de la délivrance du brevet: **17.10.2007**
(21) Numéro de dépôt: 00402208.3
(22) Date de dépôt: 02.08.2000
(51) Int. Cl.: B42C 19/02, B41F 17/02, H04N 1/32

(54) **Système automatisé de préparation de livret à la demande**
Automatisches System zur Vorbereitung auf Anfrage eines Hefts
Automatic system to prepare a booklet on demand

(30) Priorité: 03.08.1999 FR 9910067
(43) Date de publication de la demande: 07.02.2001
(73) Titulaire: NEOPOST TECHNOLOGIES, 92220 Bagneux (FR)
(72) Inventeur: Divine, Marc, 92340 Bourg La Reine (FR); Maestrimi, Yves, 9207-BM DRACHTEN (NL); Mazeiller, Dominique, 95530 La Frette Sur Seine (FR)
(74) Mandataire: David, Alain

(56) Documents cités:
- EP-A- 0 768 264

## Description

La présente invention concerne le domaine du traitement de courrier et elle se rapporte plus particulièrement à un système automatisé de préparation de livrets.

### Art antérieur

A la connaissance de la demanderesse, il n'existe pas à ce jour sur le marché un système entièrement autonome utilisable dans un environnement de bureau qui réalise à la demande une préparation complète de livrets, depuis la constitution des documents individuels formant ce livret jusqu'à leur agrafage, en passant si nécessaire par l'insertion d'encarts publicitaires ou autres et le pliage des documents.

On connaît, par la demande de brevet française N°2 739 846, une machine de finition de livrets destinée à relier entre eux une liasse de documents et qui comporte, de façon intégrée, un module d'empilement et d'alignement de documents, un module d'agrafage de ces documents, un module de pliage et un module de massicotage.

Toutefois, cette machine, notamment du fait de son fonctionnement autonome, reste assez limitée dans ses fonctionnalités. Ainsi, elle ne permet pas une insertion automatique d'encarts rigides ou de transparents et l'épaisseur des livrets que réalise la machine ne peut en aucun cas dépasser l'épaisseur maximale imposée par son module d'agrafage. La réalisation d'ouvrage de dimensions importantes est donc difficilement envisageable avec ce type de machine de l'art antérieur.

On connaît aussi par la demande EP 0 768 264 un système de mise en boîte aux lettres pour utilisateurs partagés conçu pour recevoir et empiler une pluralité de tâches d'impression pour une pluralité de receveurs différents, chaque tâche d'impression ayant une épaisseur maximale prédéfinie par la capacité d'agrafage du système.

### Définition et objet de l'invention

Aussi, la présente invention propose un système entièrement automatisé qui puisse être utilisé très simplement dans un environnement classique de bureau et qui est destiné à préparer complètement un livret. Un but de l'invention est de permettre la réalisation de livrets de toutes épaisseurs, des plus fines comme des plus épaisses. Un autre but de l'invention est aussi de réaliser un système dont les cadences élevées de traitement ne soient pas dégradées par l'insertion d'encarts même rigides.

Ces buts sont atteints par un système automatisé de préparation de livrets dans un ensemble à relier à partir de documents numériques devant être imprimés par un dispositif numérique de formation d'images disposé en entrée de cet ensemble à relier, la commande du dispositif numérique de formation d'images et de l'ensemble à relier étant effectuée à partir d'un ordinateur à usage général relié à la fois au dispositif numérique de formation d'images et à l'ensemble à relier, le système comportant :
- des moyens pour reconnaître dans les documents numériques à imprimer des premiers signaux de contrôle (S1) correspondant à chaque début de page,
- des moyens pour reconnaître dans les documents numériques à imprimer un deuxième signal de contrôle (S2) correspondant à la dernière page du livret à imprimer,
- des moyens pour déterminer le nombre de pages du livret,
- des moyens pour reconnaître dans les documents numériques à imprimer soit un troisième signal de contrôle (S3) correspondant à une fin de chapitre déterminée soit un quatrième signal de contrôle (S4) correspondant à une fin de paragraphe déterminée, si ce nombre de pages est supérieur à un nombre maximal prédéterminé de feuillets pouvant être reliés par l'ensemble à relier,
- des moyens pour imprimer au niveau du dispositif numérique de formation d'images une première partie de documents dont les pages précèdent ladite fin de chapitre ou de paragraphe déterminée,
- des moyens pour relier au niveau de l'ensemble à relier, en un premier livret élémentaire, les documents ainsi imprimés,
- des moyens pour imprimer au niveau du dispositif numérique de formation d'images au moins une seconde partie de documents dont les pages suivent ladite fin de chapitre ou de paragraphe déterminée, et
- des moyens pour relier au niveau de l'ensemble à relier, en au moins un second livret élémentaire, les documents ainsi imprimés.

Ainsi, avec la structure de l'invention toutes les fonctions nécessaires à la préparation de livrets de toute épaisseur sont réalisées très simplement par la combinaison d'un dispositif de formation d'image conventionnel associé à un ordinateur et un ensemble à relier.

Le dispositif numérique de formation d'images comporte au moins un moyen d'alimentation en documents, un module d'impression relié au moyen d'alimentation en documents pour assurer l'impression des documents, et au moins une sortie de documents reliée au module d'impression pour délivrer les documents ainsi imprimés à l'ensemble à relier, un module de commande étant en outre prévu pour assurer la commande de l'impression et la synchronisation du transport des documents en fonction d'ordres reçus de l'ordinateur à usage général.

L'ensemble à relier comporte un module d'accumulation relié à une entrée de documents destinée à coopérer avec la sortie de documents dudit dispositif numérique de formation d'images, un module d'agrafage pour agrafer les différents documents formant un livret élémentaire, et un module d'assemblage pour assembler entre eux les différents livrets élémentaires formant le livret à relier, un module de commande étant en outre prévu pour assurer la commande et la synchronisation de ces différents modules en fonction d'ordres reçus de l'ordinateur à usage général. De préférence, cet ensemble à relier comporte en outre un module de pliage relié au module d'agrafage pour plier les documents et un module de massicotage relié en sortie de ce module de pliage pour finir le livret élémentaire avant son éjection vers le module d'assemblage. Il peut aussi comporter un module d'alimentation supplémentaire en pages de garde et/ou en encarts.

Selon un mode de réalisation préférentiel, l'ordinateur à usage général, le dispositif numérique de formation d'images et l'ensemble à relier sont reliés entre eux au travers d'un réseau local de communication. Le dispositif numérique de formation d'images et l'ensemble à relier peuvent former un ensemble commun.

L'invention concerne également le procédé correspondant pour la préparation des livrets dans lequel tout d'abord on détermine le nombre de pages du livret à relier à partir de la reconnaissance de premiers signaux de contrôle extraits du document numérique associé, ensuite, si ce nombre est supérieur à un nombre maximal prédéterminé de feuillets pouvant être reliés ensemble, on détermine d'une part le nombre de livrets élémentaires qu'il convient alors de créer pour former le livret à relier et d'autre part le nombre de pages de chacun de ces livrets élémentaires, et enfin on imprime puis on relie séparément et successivement chacun des livrets élémentaires ainsi déterminés. De préférence, on peut en outre assembler entre eux les différents livrets élémentaires pour constituer ledit livret à relier.

La détermination du nombre de pages de chacun des livrets élémentaires est effectuée à partir de la reconnaissance de seconds signaux de contrôle extraits du document numérique.

Avantageusement, les premiers signaux de contrôle correspondent à des caractères de début de page et de fin de fichier du document numérique et les seconds signaux de contrôle à des caractères de fin de chapitre et de fin de paragraphe du document numérique.

Avantageusement, chaque livret élémentaire, autre que le premier livret élémentaire , est muni d'une page complémentaire de garde imprimée dans le dispositif numérique de formation d'images ou introduite directement dans l'ensemble à relier.

Selon une première variante de réalisation, les documents numériques à imprimer sont issus de la numérisation de documents originaux effectuée directement au niveau d'un module de lecture optique du dispositif numérique de formation d'images.

Selon une seconde variante de réalisation, les documents numériques à imprimer sont créés directement par saisie au clavier de l'ordinateur à usage général.

### Brève description des dessins

D'autres caractéristiques et avantages de la présente invention ressortiront mieux de la description suivante, faite à titre indicatif et non limitatif, en regard des dessins annexés, sur lesquels:
- la figure 1 montre schématiquement deux exemples d'architecture de système automatisé de préparation de livrets selon l'invention,
- la figure 2 est un organigramme explicitant les principales étapes de réalisation des livrets élémentaires formant le livret à relier,
- les figures 3 et 4 illustrent deux exemples de séparation de livrets en livrets individuels, et
- la figure 5 illustre le cheminement d'un document dans deux des composants essentiels du système de la figure 1.

### Description détaillée d'un mode de réalisation préférentiel

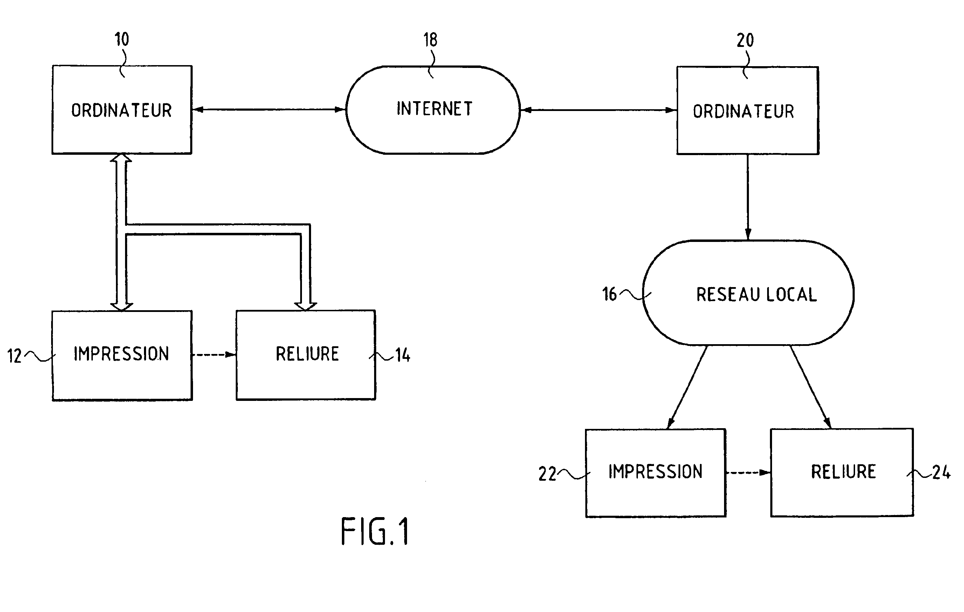

La figure 1 illustre conjointement (essentiellement dans un souci de simplification) et de façon schématique deux exemples d'architecture d'un système automatisé de préparation de livrets selon l'invention.

Dans une première configuration, ce système comporte un ordinateur ou micro ordinateur 10 relié à la fois à un dispositif numérique de formation d'images (Digital imaging device 12) et à un ensemble à relier 14. Dans une seconde configuration, ce système est bâti autour d'un réseau local de communication 16 auquel sont reliés un ordinateur ou micro ordinateur 20, un dispositif numérique de formation d'image 22 et un ensemble à relier 24.

L'ordinateur 10, 20 assure la création de documents numériques (par exemple par saisie directe au clavier) et leur traitement (mise en page, modification éventuelle avec notamment l'adjonction d'éléments graphiques) en vue de leur impression dans le dispositif numérique de formation d'images 12, 22 puis de leur assemblage final en livrets (reliure) dans l'ensemble à relier 14, 24. Toutefois, les documents numériques ainsi créés, et éventuellement retraités, au niveau de l'ordinateur, peuvent tout aussi bien être reçus, par exemple sous forme de télécopie ou de courrier électronique, depuis un réseau externe de communication 18 relié à cet ordinateur 10, 20, tel le réseau mondial connu sous le nom de « réseau Internet ». Bien entendu, les opérations d'impression et de reliure précitées, ainsi que celle éventuelle de récupération des documents à imprimer au travers du réseau 18 (évitant ainsi l'étape initiale de saisie), sont effectuées sous les directives de l'ordinateur 10, 20.

Les trois constituants du système précité : ordinateur, dispositif de formation d'images et ensemble à relier, sont connus en soi mais leur association apporte des fonctions complémentaires nouvelles qui les rendent particulièrement intéressants pour une préparation automatisée de livrets.

En effet, selon l'invention, l'ordinateur 10, 20 comporte des moyens, notamment logiciels, pour assurer un formatage automatique des livrets (c'est à dire une scission du livret à relier en plusieurs livrets élémentaires) lorsque ces livrets présentent un nombre de pages excédant la capacité maximale d'agrafage de l'ensemble à relier. Ces moyens comportent essentiellement des moyens pour reconnaître dans les documents numériques associés au livret à relier différents signaux de contrôle à partir desquels ce formatage automatique du livret pourra être effectué. Ces signaux de contrôle au minimum au nombre de trois, et de préférence au nombre de quatre, sont générés automatiquement, lors de la création des documents au niveau de l'ordinateur 10, 20, par le logiciel de traitement de document utilisé pour cette création (par exemple le logiciel WORD^{®} de la société Microsoft). Un premier signal de contrôle (S1) est constitué par le caractère de début de page généré à chaque début de page, un deuxième signal de contrôle (S2) est constitué par le caractère de fin de fichier signalant en général la dernière page du livret devant être imprimé puis relié, un troisième signal de contrôle (S3) est constitué par un caractère de fin de chapitre généré après chaque chapitre et enfin un quatrième signal de contrôle (S4) est constitué par un caractère de fin de paragraphe généré à la fin de chaque paragraphe. On notera que lorsque le document numérique est reçu par le réseau de communication externe, ces différents signaux de contrôle sont en principe aussi présents dans les documents importés. A partir de ces signaux, l'ordinateur va déterminer le nombre de pages du livret à imprimer et, si ce nombre est supérieur à un nombre maximal prédéterminé de feuillets pouvant être reliés par l'ensemble à relier, il va déterminer le nombre de livrets élémentaires qu'il convient de créer pour former ce livret ainsi que le nombre de pages de chacun de ces livrets élémentaires. Chaque livret élémentaire peut ensuite être imprimé séparément et successivement au niveau du dispositif numérique de formation d'images puis relié au niveau de l'ensemble à relier. Les livrets élémentaires, autre que le premier, peuvent si nécessaire être pourvus d'une page de garde spécifique.

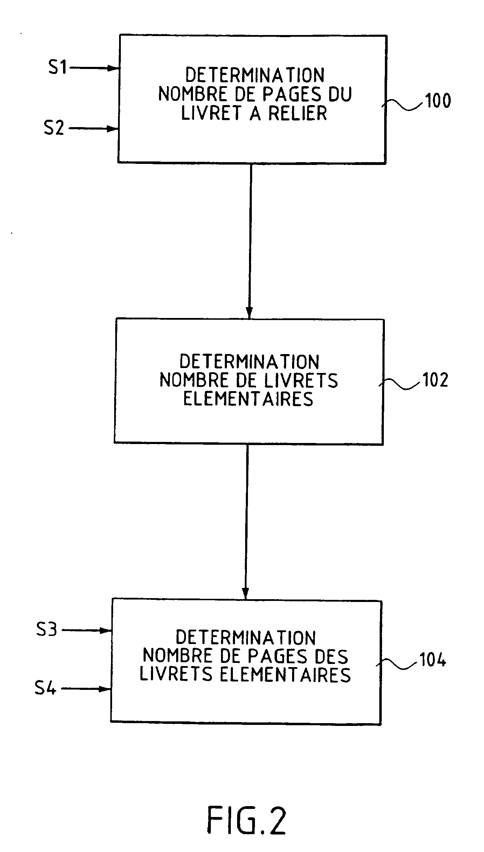

La figure 2 illustre le processus de détermination du nombre de pages des livrets élémentaires. Dans une première étape 100, il est procédé à la détermination du nombre de pages du livret à relier à partir des premier (S1) et second (S2) signaux de contrôle puis le nombre de livrets élémentaires est déterminé dans une étape 102. Cette détermination du nombre de livrets est effectuée en procédant à la division du nombre de pages du livret à relier par le nombre maximal prédéterminé de feuillets accepté par l'ensemble à relier. Le nombre de livrets élémentaires devant être imprimés correspond alors à la partie entière du résultat de cette division augmentée d'une unité.

Ainsi, un livret de 70 pages devant être relié par un ensemble à relier acceptant au plus 50 feuillets sera scindé en 2 livrets élémentaires et un livret de 112 pages en 3 livrets élémentaires (le nombre 3 correspond en effet à la partie entière plus 1 de la division de 112/50=2,24).

Le nombre de pages de chacun des livrets élémentaires est alors déterminé dans une étape suivante 104 de préférence en divisant le nombre de pages du livret à imprimer par le nombre de livrets élémentaires déterminé précédemment, la page de fin de livret élémentaire (la plus proche de la page de coupure théorique) devant correspondre à une page du livret à relier comportant de préférence une fin de chapitre (repérée par le signal S3) et à défaut une fin de paragraphe (repérée par le signal S4).

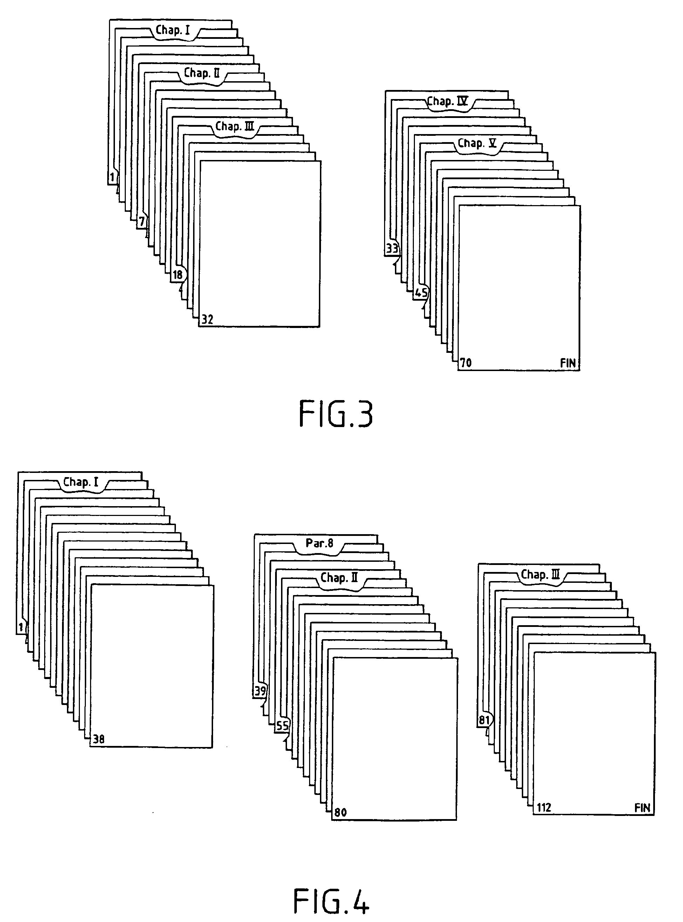

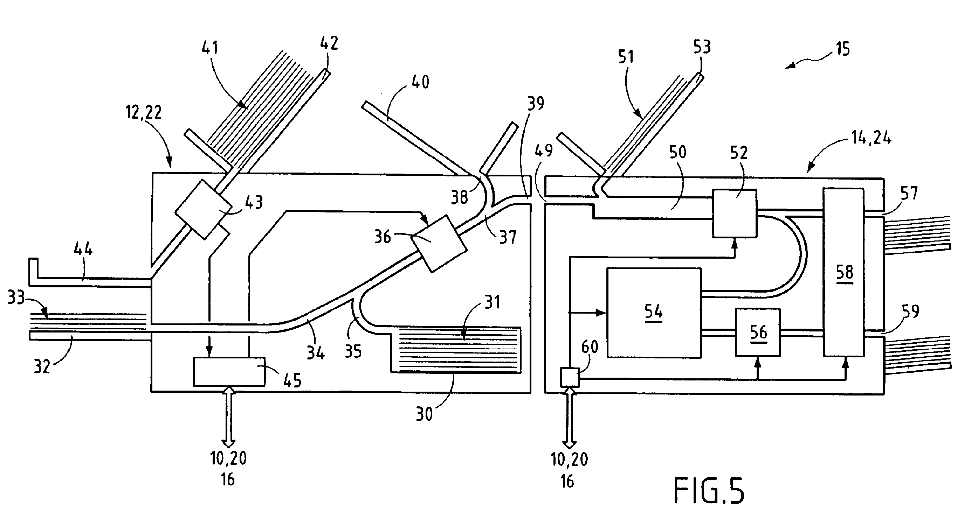

Les figures 3 et 4 montrent deux exemples de formatage de livrets de respectivement 70 et 112 pages. Sur la figure 3, on observe un livret de 5 chapitres commençant respectivement aux pages 1, 7, 18, 33, 45. En divisant le nombre de pages du livret à relier 70 par le nombre de livrets élémentaires 2 (comme indiqué précédemment), on obtient un nombre de pages théoriques par livret élémentaire de 35 pages. Cette 35ième page du livret ne comportant pas de fin de chapitre, il convient donc de rechercher sur les pages immédiatement antérieures ou postérieures une telle fin de chapitre. Les pages 32 et 44 répondent toutes deux à ce critère. Toutefois, la page 32 est plus proche de la page de coupure théorique (la page 35) et c'est donc cette page qui doit être retenue comme page de fin du premier livret élémentaire de 32 pages. Le second livret élémentaire comportera quant lui 38 pages numérotées de la page 33 à la page 70. Sur la figure 4 est représenté un livret de 112 pages dont le premier chapitre comporte à lui seul 54 pages soit un nombre de pages supérieur à la capacité d'agrafage de l'ensemble à relier. Une détermination de la coupure n'est donc plus possible sur la seule détermination des fins de chapitre et le recours à la détermination des fins de paragraphe s'avère dans ce cas indispensable. On va donc procéder comme suit. En divisant le nombre de pages du livret à relier 112 par le nombre de livrets élémentaires 3 (comme indiqué précédemment), on obtient un nombre de pages théoriques par livret élémentaire de 37 pages. Les 37ième et 74ième pages du livret ne comportant pas de fin de chapitre, on va rechercher sur les pages immédiatement antérieures ou postérieures une telle fin de chapitre. Les pages 54 et 80 répondent toutes deux à ce critère. Toutefois, la page 54 étant supérieure à la capacité de l'ensemble à relier, on va rechercher une fin de paragraphe la plus proche de la page de coupure théorique (la page 37), et c'est donc en fait la page 38 correspondant à la fin du paragraphe 7 du chapitre 1 qui sera retenue comme page de fin de ce premier livret élémentaire de 38 pages. Le second livret élémentaire comportera 42 pages des pages 39 à 80 et le troisième livret élémentaire 32 pages de la page 81 à la dernière page 112 du livret.

Il convient de noter qu'ainsi on obtient des livrets de taille sensiblement identique. Bien entendu, il est possible de procéder différemment et notamment de choisir pour le ou les premiers livrets élémentaires l'épaisseur maximale autorisée par l'ensemble à relier, le dernier livret comportant alors les pages restantes (par exemple des livrets de respectivement 44 pages, la coupure théorique étant à 50, et 26 pages dans le cas du livret de 70 pages).

La figure 5 illustre plus en détail les différents éléments matériels constitutifs du dispositif numérique de formation d'images et de l'ensemble à relier.

Le dispositif numérique de formation d'image 12, 22 est de préférence un dispositif multifonctions à usage général assurant à la fois une fonction d'impression avantageusement en couleur, de type laser ou à jet d'encre et une fonction de numérisation, de préférence également en couleur. Sa mise en oeuvre, en mode autonome ou à partir de l'ordinateur 10 (éventuellement au travers du réseau local 16), est effectuée de façon très classique par l'intermédiaire de moyens logiciels connus en soi. Notamment, ce dispositif peut être utilisé d'une part comme tout terminal d'impression de documents en liaison avec les logiciels bureautiques standards du marché comme Word, Excel, ou Access par exemple (logiciels de la société Microsoft Corporation) implantés dans l'ordinateur 10, 20 et d'autre part, comme tout terminal de numérisation couleur (scanner) ou de reproduction couleur de documents (copieur).

Ce dispositif 12, 22 comporte classiquement un premier moyen d'alimentation 30 pour recevoir des documents vierges 31 devant être imprimés et qui formeront les livrets et un second moyen d'alimentation 32 pour recevoir des encarts 33 (ou des transparents) destinés par exemple à former la couverture des livrets. Le moyen d'alimentation en documents 30 peut être réalisé par exemple sous la forme d'un bac de chargement externe ou, comme illustré, sous la forme d'un magasin encastrable à chargement latéral. De même, le moyen d'alimentation en encarts 32 peut être réalisé par exemple sous la forme d'un magasin encastrable à chargement latéral ou, comme illustré, sous la forme d'un bac de chargement externe. Des chemins de transport 34, 35 (les rouleaux de transport et leur motorisation ne sont pas représentés) permettent de transporter ces documents et encarts vers un module d'impression 36 (en variante, les encarts peuvent être dirigés directement vers une sortie du dispositif). Ce module est constitué avantageusement soit d'un tambour d'impression (dans le cas d'une impression laser) soit d'une tête d'impression thermique (dans le cas d'une impression à jet d'encre). En sortie du module d'impression, un autre chemin de transport 37 permet de diriger le document imprimé vers des première 38 ou seconde 39 sorties du dispositif. La première sortie 38 permet l'alimentation d'un premier bac de réception 40, placé classiquement sur une partie supérieure du dispositif, et destiné à recevoir les documents imprimés dans le cadre d'une utilisation conventionnelle en mode autonome (fonction scanner ou copieur) ou en liaison avec l'ordinateur à usage général 10, 20 (fonction imprimante), la seconde sortie 39, placée avantageusement à l'arrière du dispositif, étant destinée à alimenter directement l'ensemble à relier 14, 24 au niveau de son entrée de document.

Ce dispositif numérique 12, 22 comporte en outre un troisième moyen d'alimentation réalisé par exemple sous la forme d'un bac de chargement frontal externe 42 pour recevoir des documents à numériser 41 qui constitueront des documents originaux à partir desquels des documents vierges (issus du bac 30) pourront être imprimés en vue de réaliser des livrets. Ces documents, après passage devant un module de lecture optique 43 seront ensuite disponibles sur une partie avant du dispositif au niveau d'un second bac de réception 44. Un module de commande, avantageusement à microprocesseur 45, est bien entendu prévu dans le dispositif pour commander à la fois la numérisation (en liaison avec le module 43) et l'impression (en liaison avec le module 36) et synchroniser le transport des documents le long des différents chemins de transport 34, 35, 37 du dispositif. Ce module de commande dispose bien entendu d'une liaison externe avec l'ordinateur directement (pour l'ordinateur 10) ou au travers du réseau local 16 (pour l'ordinateur 20).

L'ensemble à relier 14, 24 est issu d'un ensemble classique, par exemple du type de celui décrit dans la demande de brevet FR 2 739 846 précitée. Il se compose essentiellement d'un module d'accumulation 50 relié à une entrée 49 de cet ensemble et destiné à recevoir un à un les documents (et éventuellement les encarts 51 introduits par un bac d'alimentation 53) devant former le livret à relier, un module d'agrafage 52 pour agrafer les liasses de documents ainsi empilés (de préférence avec des agrafes à boucles), un module de pliage 54 disposé en sortie du module d'accumulation pour éventuellement plier ces liasses et un module de massicotage 56 disposé en sortie du module de pliage pour couper et égaliser les liasses ainsi pliées. Une fois chaque livret élémentaire réalisé, et selon qu'il a été plié (et donc s'il a traversé le module de pliage) ou non, il est dirigé vers un module d'assemblage 58 qui va réunir entre eux les livrets élémentaires (par exemple en reliant entres-elles par des tiges métalliques les différentes boucles des agrafes) avant de les éjecter soit par une première sortie 57 de l'ensemble à relier soit par une seconde sortie 59. Un module de commande, avantageusement à microprocesseur 60, est bien entendu prévu dans le dispositif pour commander à la fois l'agrafage (en liaison avec le module 52), le pliage (en liaison avec le module 54), le massicotage (en liaison avec le module 56) et l'assemblage définitif (en liaison avec le module 58) et pour synchroniser le transport des documents entre les différents modules du dispositif. Ce module de commande 60 dispose aussi d'une liaison externe avec l'ordinateur directement (pour l'ordinateur 10) ou au travers du réseau local 16 (pour l'ordinateur 20).

L'ordinateur 10, 20 est un ordinateur à usage général, par exemple un ordinateur personnel de type PC ou analogue (mais une station de travail ou un ordinateur de réseau peuvent également convenir), comportant classiquement une unité centrale à laquelle sont reliés par un bus de liaison standardisé des mémoires de programme (par exemple de type ROM, EEPROM ou analogue), des mémoires de données (de type RAM ou équivalent) et plusieurs modules d'entrée/sortie. Ces modules assurent de façon classique l'interface entre l'unité centrale de cet ordinateur et d'une part le dispositif numérique de formation d'image 12, 22 et l'ensemble à relier 14, 24 et d'autre part différents périphériques associés à cette unité centrale, comme un clavier, un ensemble de pointage (notamment boule de commande ou souris), un terminal d'affichage (à plasma ou à cristaux liquides par exemple), un dispositif de stockage de données (comme un disque dur, une cassette magnétique, un CD ou DVD-ROM), un modulateur/démodulateur (analogique, ADSL ou de type modem-câble selon la nature de la liaison aux réseaux 16, 18).

L'ordinateur comporte, outre des différents moyens logiciels pour assurer les différentes fonctions de traitement de documents (notamment graphique) et de préparation des livrets décrites précédemment, des moyens pour assurer des fonctions conventionnelles de télécopie à l'émission et à la réception ainsi que des fonctions de réception et d'envoi de courriers électroniques sur le réseau Internet.

La préparation complète d'un livret s'effectue de la façon suivante. Après que les documents composant le livret à relier ont été créés à l'ordinateur 10, 20 (ou reçus au travers du réseau externe 18), celui-ci va procéder à la reconnaissance des différents signaux de contrôle pour déterminer le nombre et l'épaisseur des livrets élémentaires à relier, avant de commander (via le module de commande 45) l'impression successive de ces livrets élémentaires au dispositif numérique de formation d'images 12, 22 à partir des documents vierges 31 contenus dans le bac de sélection 30. Les documents imprimés sont ensuite, toujours sous la commande de l'ordinateur, dirigés un à un vers l'ensemble à relier 14, 24 où ils sont stockés dans le module d'accumulation 50 avant d'être agrafés (au module 52) et éventuellement pliés par le module de pliage 54. Le livret élémentaire relié est alors dirigé vers le module d'assemblage 58 (après massicotage 56 en cas de pliage préalable) de l'ensemble à relier (en absence de pliage le livret est dirigé directement vers ce module 58) où il est emmagasiné en attendant de recevoir les livrets élémentaires suivants devant former le livret complet à relier. Une fois ces livrets élémentaires reçus par le module d'assemblage, ces livrets sont assemblés en un livret unique qui est éjecté par la sortie 57 ou 59. Les pages de gardes des différents livrets sont introduits directement dans l'ensemble à relier au niveau du bac d'alimentation 53 ou proviennent du dispositif de formation d'images (après impression ou non).

On pourra noter que une fois la phase de d'agrafage d'un livret élémentaire terminée, la commande de l'impression d'un autre livret élémentaire peut être lancée par l'ordinateur 10, 20 sans attendre la finition complète d'un livret élémentaire. Ce travail dit en temps masqué permet une augmentation sensible des cadences de préparation de livret.

On aura noté que le document à imprimer extrait du magasin 30 peut aussi être élaboré en interne dans le dispositif 12, 22 à partir de la numérisation d'un ou plusieurs documents par le module de lecture optique 43, les données de numérisation étant ensuite adressées à l'ordinateur 10, 20, via le module de commande 45, qui effectue la reconnaissance des signaux de contrôle en vue de l'impression ultérieure de ces documents par le module d'impression 36.

Les différentes fonctions assurées par la présente invention en font une véritable machine de bureautique, bien adaptée aux petites structures et à un ensemble de préparation de livrets dont il optimise l'équation performances/qualité/prix.

Bien entendu, la présente invention ne se limite pas au seul mode préférentiel de réalisation décrit et des variantes ou compléments peuvent être envisagés sans sortir du cadre de l'invention. Ainsi, l'assemblage des livrets élémentaires par l'association de tiges et d'agrafes à boucles peut également être réalisé par une association d'agrafes conventionnelles avec des lames ou tout ensemble d'assemblage équivalent. De même, le dispositif numérique de formation d'images et l'ensemble à relier peuvent être valablement intégrés en un seul ensemble se présentant alors sous la forme d'une machine de bureautique spécifique 15 entièrement autonome pour la préparation de livrets.

## Revendications

1. Procédé automatisé de préparation de livrets à partir de documents numériques associés à ces livrets et devant être préalablement imprimés, **caractérisé en ce que** tout d'abord on détermine le nombre de pages du livret à relier à partir de la reconnaissance de premier (S1) et deuxième (S2) signaux de contrôle extraits du document numérique associé, ensuite, si ce nombre est supérieur à un nombre maximal prédéterminé de feuillets pouvant être reliés ensemble, on détermine d'une part le nombre de livrets élémentaires qu'il convient alors de créer pour former le livret à relier et d'autre part le nombre de pages de chacun de ces livrets élémentaires, et enfin on imprime puis on relie séparément et successivement chacun des livrets élémentaires ainsi déterminés.

2. Procédé selon la revendication 1, **caractérisé en ce qu'**en outre on assemble entre eux les différents livrets élémentaires pour constituer ledit livret à relier.

3. Procédé selon la revendication 1, **caractérisé en ce que** lesdits premier et deuxième signaux de contrôle correspondent respectivement à des caractères de début de page et de fin de fichier du document numérique.

4. Procédé selon la revendication 1, **caractérisé en ce que** la détermination du nombre de pages de chacun des livrets élémentaires est effectuée à partir de la reconnaissance de troisième (S3) et quatrième (S4) signaux de contrôle extraits du document numérique.

5. Procédé selon la revendication 4, **caractérisé en ce que** lesdits second troisième et quatrième signaux de contrôle correspondent respectivement à des caractères de fin de chapitre et de fin de paragraphe du document numérique.

6. Procédé selon la revendication 1, **caractérisé en ce que** la détermination du nombre de livrets élémentaires comporte la détermination de la partie entière issue de la division du nombre de pages du livret à relier par ledit nombre maximal prédéterminé de feuillets.

7. Procédé selon l'une quelconque des revendications 1 à 6, **caractérisé en ce que** lesdits documents numériques sont imprimés par un dispositif numérique de formation d'images (12, 22) disposé en entrée d'un ensemble à relier (14, 24), la commande du dispositif numérique de formation d'images et de l'ensemble à relier étant effectuée à partir d'un ordinateur à usage général (10, 20) relié à la fois au dispositif numérique de formation d'images et à l'ensemble à relier.

8. Procédé selon la revendication 7, **caractérisé en ce que** chaque livret élémentaire, autre que le premier livret, est muni d'une page complémentaire de garde imprimée dans le dispositif numérique de formation d'images ou introduite directement (51, 53) dans l'ensemble à relier.

9. Procédé selon la revendication 7, **caractérisé en ce que** lesdits documents numériques à imprimer sont issus de la numérisation de documents originaux effectuée directement au niveau d'un module de lecture optique (43) du dispositif numérique de formation d'images (12, 22)

10. Procédé selon la revendication 7, **caractérisé en ce que** lesdits documents numériques à imprimer sont créés directement par saisie au clavier de l'ordinateur à usage général (10, 20).

11. Système automatisé de préparation de livrets dans un ensemble à relier (14, 24) à partir de documents numériques devant être imprimés par un dispositif numérique de formation d'images (12, 22) disposé en entrée de cet ensemble à relier, la commande du dispositif numérique de formation d'images et de l'ensemble à relier étant effectuée à partir d'un ordinateur à usage général (10, 20) relié à la fois au dispositif numérique de formation d'images et à l'ensemble à relier, le système comportant :
- des moyens (10,20) pour reconnaître dans les documents numériques à imprimer des premiers signaux de contrôle (S1) correspondant à chaque début de page,
- des moyens (10, 20) pour reconnaître dans les documents numériques à imprimer un deuxième signal de contrôle (S2) correspondant à la dernière page du livret à imprimer,
- des moyens (10, 20) pour déterminer le nombre de pages du livret,
- des moyens (10, 20) pour déterminer si ce nombre de pages est supérieur à un nombre maximal prédéterminé de feuilles pouvant être reliés par l'ensemble à relier,
- des moyens (10, 20) pour reconnaître dans les documents numériques à imprimer soit un troisième signal de contrôle (S3) correspondant à une fin de chapitre déterminée soit un quatrième signal de contrôle (S4) correspondant à une fin de paragraphe déterminée, si ce nombre de pages est supérieur au dit nombre maximal prédéterminé de feuillets pouvant être reliés par l'ensemble à relier,
- des moyens (10, 20, 45) pour commander l'impression par un module d'impression (36) du dispositif numérique de formation d'images (12, 22) d'une première partie de documents dont les pages précèdent ladite fin de chapitre ou de paragraphe déterminée,
- des moyens (10, 20, 60) pour commander la reliure par un module d'agrafage (52) de l'ensemble à relier (14, 24), en un premier livret élémentaire, des documents ainsi imprimés,
- des moyens (10, 20, 45) pour commander l'impression par un module d'impression (36) du dispositif numérique de formation d'images (12, 22) d'au moins une seconde partie de documents dont les pages suivent ladite fin de chapitre ou de paragraphe déterminée, et
- des moyens (10, 20, 60) pour commander la reliure par un module d'agrafe (52) de l'ensemble à relier (14, 24), en au moins un second livret élémentaire, des documents ainsi imprimés.

12. Système selon la revendication 11, **caractérisé en ce qu'**il comporte en outre des moyens (58) pour assembler lesdits livrets élémentaires en un livret relié unique.

13. Système selon la revendication 11, **caractérisé en ce que** ledit dispositif numérique de formation d'images comporte au moins un moyen d'alimentation en documents (30), ledit module d'impression (36) relié au moyen d'alimentation en documents pour assurer l'impression des documents, et au moins une sortie de documents (39) reliée au module d'impression pour délivrer les documents ainsi imprimés à l'ensemble à relier (14, 24), ledit module de commande (45) étant en outre prévu pour assurer la commande de l'impression et la synchronisation du transport des documents en fonction d'ordres reçus de l'ordinateur à usage général (10, 20).

14. Système selon la revendication 11, **caractérisé en ce que** ledit ensemble à relier comporte un module d'accumulation (50) relié à une entrée de documents (49) destinée à coopérer avec la sortie de documents (39) dudit dispositif numérique de formation d'images, ledit module d'agrafage (52) pour agrafer les différents documents formant un livret élémentaire, et un module d'assemblage (58) pour assembler entre eux les différents livrets élémentaires formant le livret à relier, ledit module de commande (60) étant en outre prévu pour assurer la commande et la synchronisation de ces différents modules en fonction d'ordres reçus de l'ordinateur à usage général (10, 20).

15. Système selon la revendication 12, **caractérisé en ce que** ledit ensemble à relier comporte en outre un module de pliage (54) relié au module d'agrafage pour plier les documents et un module de massicotage (56) relié en sortie de ce module de pliage pour finir le livret élémentaire avant son éjection vers le module d'assemblage (58).

16. Système selon la revendication 12, **caractérisé en ce que** ledit ensemble à relier comporte en outre un module (53) d'alimentation supplémentaire en pages de garde et/ou en encarts divers (51).

17. Système selon la revendication 11, **caractérisé en ce que** l'ordinateur à usage général (20), le dispositif numérique de formation d'images (22) et l'ensemble à relier (24) sont reliés entre eux au travers d'un réseau local de communication (16).

18. Système selon l'une quelconque des revendications 11 à 17, **caractérisé en ce que** le dispositif numérique de formation d'images (12) et l'ensemble à relier (14) forment un ensemble commun (15).

## Claims

1. An automated process for producing booklets from digital documents associated with these booklets and having to be printed beforehand, **characterised in that** firstly the number of pages in the booklet to be bound is determined on the basis of the recognition of first and second control signals (S1, S2) extracted from the associated digital document, then, if this number is greater than the predetermined maximum number of sheets that can be bound together, the number of elementary booklets which it is then appropriate to create in order to form the booklet to be bound, on the one hand, and the number of pages in each of these elementary booklets, on the other hand, are determined and, finally, each of the elementary booklets thus determined is printed and then bound, separately and successively.

2. The process according to claim 1, **characterised in that** the various elementary booklets are furthermore joined together to form said booklet to be bound.

3. The process according to claim 1, **characterised in that** said first and second control signals correspond to start-of-page and end-of-file characters from the digital document, respectively.

4. The process according to claim 1, **characterised in that** the number of pages in each of the elementary booklets is determined on the basis of the recognition of third and fourth control signals (S3, S4) extracted from the digital document.

5. The process according to claim 4, **characterised in that** said second, third and fourth control signals correspond to end-of-chapter and end-of-paragraph characters from the digital document, respectively.

6. The process according to claim 1, **characterised in that** the number of elementary booklets is determined on the basis of the integer part coming from the division of the number of pages in the booklet to be bound by said predetermined maximum number of sheets.

7. The process according to any one of claims 1 to 6, **characterised in that** said digital documents are printed by a digital imaging device (12, 22) placed at the input of a binding unit (14, 24), the digital imaging device and the binding unit being controlled by a general-purpose computer (10, 20) linked both to the digital imaging device and to the binding unit.

8. The process according to claim 7, **characterised in that** each elementary booklet, other than the first booklet, is provided with a complementary flyleaf printed in the digital imaging device or inserted directly (51, 53) into the binding unit.

9. The process according to claim 7, **characterised in that** said digital documents to be printed come from the digitization of original documents carried out directly in an optical read module (43) of the digital imaging device (12, 22).

10. The process according to claim 7, **characterised in that** said digital documents to be printed are created directly by entry via the keyboard of the general-purpose computer (10, 20).

11. An automated system for producing booklets in a binding unit (14, 24) from digital documents that are to be printed by a digital imaging device (12, 22) placed at the input of this binding unit, the digital imaging device and the binding unit being controlled by a general-purpose computer (10, 20) linked both to the digital imaging device and to the binding unit, the system comprising:
- means (10, 20) for recognizing, in the digital documents to be printed, first control signals (S1) corresponding to each start of page;
- means (10, 20) for recognizing, in the digital documents to be printed, a second control signal (S2) corresponding to the last page of the booklet to be printed;
- means (10, 20) for determining the number of pages in the booklet;
- means (10, 20) for determining whether this number of pages is greater than the predetermined maximum number of sheets that can be bound by the binding unit;
- means (10, 20) for recognizing, in the digital documents to be printed, either a third control signal (S3) corresponding to a defined end of chapter or a fourth control signal (S4) corresponding to a defined end of paragraph, if this number of pages is greater than the predetermined maximum number of sheets that can be bound by the binding unit;
- means (10, 20, 45) for printing via a printing module (36), in the digital imaging device (12, 22), a first part of documents whose pages precede said defined end of chapter or end of paragraph;
- means (10, 20, 60) for binding via a fastening module (52), in the binding unit (14, 24), into a first elementary booklet, the documents thus printed;
- means (10, 20, 45) for printing via a printing module (36), in the digital imaging device (12, 22), at least one second part of documents whose pages follow said defined end of chapter or end of paragraph; and
- means (10, 20, 60) for binding via a fastening module (52), in the binding unit (14, 24), at least into a second elementary booklet, the documents thus printed.

12. The system according to claim 11, **characterised in that** it furthermore includes means (58) for joining said elementary booklets together into a single bound booklet.

13. The system according to claim 11, **characterised in that** said digital imaging device includes at least one document feed means (30), a printing module (36) linked to the document feed means in order to print the documents, and at least one document output (39) linked to the printing module in order to deliver the documents thus printed to the binding unit (14, 24), said control module (45) being furthermore provided in order to control the printing and to synchronize the transporting of the documents in accordance with orders received from the general-purpose computer (10, 20).

14. The system according to claim 11, **characterised in that** said binding unit includes an accumulating module (50) linked to a document input (49) intended to engage with the document output (39) of said digital imaging device, said fastening module (52) for fastening the various documents forming an elementary booklet, and an assembling module (58) for joining the various elementary booklets together, forming the booklet to be bound, said control module (60) being furthermore provided for controlling and synchronizing these various modules in accordance with orders received from the general-purpose computer (10, 20).

15. The system according to claim 12, **characterised in that** said binding unit furthermore includes a folding module (54) linked to the fastening module in order to fold the documents and a trimming module (56) linked at the output of this folding module in order to finish the elementary booklet before ejecting it into the assembling module (58).

16. The system according to claim 12, **characterised in that** said binding unit furthermore includes an additional feed module (53) for feeding flyleaves and/or various inserts (51).

17. The system according to claim 11, **characterised in that** the general-purpose computer (20), the digital imaging device (22) and the binding unit (24) are linked together via a local communication network (16).

18. The system according to any one of claims 11 to 17, **characterised in that** the digital imaging device (12) and the binding unit (14) form a common unit (15).

## Patentansprüche

1. Automatisiertes Verfahren zur Herstellung von Broschüren aus digitalen Dokumenten, die diesen Broschüren zugeordnet sind und die zuvor gedruckt werden sollen, **dadurch gekennzeichnet, daß** zunächst die Seitenanzahl der zu bindenden Broschüre anhand der Erkennung eines aus dem zugeordneten digitalen Dokument gewonnenen ersten (S1) und zweiten (S2) Kontrollsignals bestimmt wird, anschließend - wenn diese Anzahl größer ist als eine vorbestimmte maximale Anzahl von Blättern, die zusammengebunden werden können - einerseits die Anzahl von Einzelbroschüren bestimmt wird, die es sich nun zu erstellen empfiehlt, um die zu bindende Broschüre zu bilden, und andererseits die Seitenanzahl einer jeden dieser Einzelbroschüren festgelegt wird, und schließlich eine jede der auf diese Weise bestimmten Einzelbroschüren separat und nacheinander gedruckt und dann gebunden wird.

2. Verfahren nach Anspruch 1, **dadurch gekennzeichnet, daß** ferner die verschiedenen Einzelbroschüren zusammengefügt werden, um die zu bindende Broschüre zu bilden.

3. Verfahren nach Anspruch 1, **dadurch gekennzeichnet, daß** das erste und das zweite Kontrollsignal Seitenanfangszeichen bzw. Dateiendzeichen des digitalen Dokuments entsprechen.

4. Verfahren nach Anspruch 1, **dadurch gekennzeichnet, daß** die Festlegung der Seitenanzahl einer jeden der Einzelbroschüren anhand der Erkennung eines aus dem digitalen Dokument gewonnenen dritten (S3) und vierten (S4) Kontrollsignals erfolgt.

5. Verfahren nach Anspruch 4, **dadurch gekennzeichnet, daß** das dritte und das vierte Kontrollsignal Kapitelendzeichen bzw. Absatzendzeichen des digitalen Dokuments entsprechen.

6. Verfahren nach Anspruch 1, **dadurch gekennzeichnet, daß** die Bestimmung der Anzahl von Einzelbroschüren die Bestimmung des Ganzteils umfaßt, der aus der Division der Seitenanzahl der zu bindenden Broschüre durch die vorbestimmte maximale Blätteranzahl hervorgeht.

7. Verfahren nach irgendeinem der Ansprüche 1 bis 6, **dadurch gekennzeichnet, daß** die digitalen Dokumente mittels einer digitalen Bildererzeugungseinrichtung (12, 22) gedruckt werden, die am Eingang einer Bindeeinheit (14, 24) angeordnet ist, wobei die Steuerung der digitalen Bildererzeugungseinrichtung und der Bindeeinheit mit Hilfe eines Computers für den allgemeinen Gebrauch (10, 20) vollzogen wird, der sowohl mit der digitalen Bildererzeugungseinrichtung als auch mit der Bindeeinheit verbunden ist.

8. Verfahren nach Anspruch 7, **dadurch gekennzeichnet, daß** jede Einzelbroschüre, mit Ausnahme der ersten Broschüre, mit einem ergänzenden Vorsatzblatt versehen ist, das in der digitalen Bilderzeugungseinrichtung gedruckt oder direkt (51, 53) in die Bindeeinheit eingeführt wird.

9. Verfahren nach Anspruch 7, **dadurch gekennzeichnet, daß** die zu druckenden digitalen Dokumente aus der Digitalisierung von Originaldokumenten hervorgegangen sind, die direkt im Bereich eines Moduls zum optischen Lesen (43) der digitalen Bilderzeugungseinrichtung (12, 22) durchgeführt wird.

10. Verfahren nach Anspruch 7, **dadurch gekennzeichnet, daß** die zu druckenden digitalen Dokumente direkt durch Erfassen über die Tastatur des Computers für den allgemeinen Gebrauch (10, 20) erzeugt werden.

11. Automatisiertes System zur Herstellung von Broschüren in einer Bindeinheit (14, 24) aus digitalen Dokumenten, die durch eine digitale Bilderzeugungseinrichtung (12, 22), welche am Eingang dieser Bindeeinheit angeordnet ist, gedruckt werden sollen, wobei die Steuerung der digitalen Bilderzeugungseinrichtung und der Bindeeinheit mit Hilfe eines Computers für den allgemeinen Gebrauch (10, 20) vollzogen wird, der sowohl mit der digitalen Bildererzeugungseinrichtung als auch mit der Bindeeinheit verbunden ist, wobei das System folgendes umfaßt:
- Mittel (10, 20), um in den zu druckenden digitalen Dokumenten erste Kontrollsignale (S1) zu erkennen, die jedem Seitenanfang entsprechen,
- Mittel (10, 20), um in den zu druckenden digitalen Dokumenten ein zweites Kontrollsignal (S2) zu erkennen, das der letzten Seite der zu druckenden Broschüre entspricht,
- Mittel (10, 20), um die Seitenanzahl der Broschüre festzulegen,
- Mittel (10. 20), um zu ermitteln, ob diese Seitenanzahl größer ist als eine vorbestimmte maximale Anzahl von Blättern, die durch die Bindeeinheit gebunden werden können,
- Mittel (10, 20), um in den zu druckenden digitalen Dokumenten entweder ein drittes Kontrollsignal (S3), das einem bestimmten Kapitelende entspricht, oder ein viertes Kontrollsignal (S4), das einem bestimmten Absatzende entspricht, zu erkennen, wenn diese Seitenanzahl größer als die vorbestimmte maximale Anzahl von Blättern ist, die durch die Bindeeinheit gebunden werden können,
- Mittel (10, 20, 45), um das Drucken durch ein Druckmodul (36) der digitalen Bilderzeugungseinrichtung (12, 22) eines ersten Teils von Dokumenten zu steuern, dessen Seiten dem bestimmten Kapitel- oder Absatzende vorangehen,
- Mittel (10, 20, 60), um das Binden durch ein Heftmodul (52) der Bindeeinheit (14, 24) der so gedruckten Dokumente zu einer ersten Einzelbroschüre zu steuern,
- Mittel (10, 20, 45), um das Drucken durch ein Druckmodul (36) der digitalen Bilderzeugungseinrichtung (12, 22) wenigstens eines zweiten Teils von Dokumenten zu steuern, dessen Seiten dem bestimmten Kapitel- oder Absatzende folgen, und
- Mittel (10, 20, 60), um das Binden durch ein Heftmodul (52) der Bindeeinheit (14, 24) der so gedruckten Dokumente zu wenigstens einer zweiten Einzelbroschüre zu steuern.

12. System nach Anspruch 11, **dadurch gekennzeichnet, daß** es ferner Mittel (58) umfaßt, um die Einzelbroschüren zu einer einzigen gebundenen Broschüre zusammenzufügen.

13. System nach Anspruch 11, **dadurch gekennzeichnet, daß** die digitale Bilderzeugungseinrichtung wenigstens ein Dokumentenzuführmittel (30), das mit dem Dokumentenzuführmittel verbundene Druckmodul (36), um das Drucken der Dokumente sicherzustellen, sowie wenigstens einen mit dem Druckmodul verbundenen Dokumentenausgang (39) umfaßt, um die so gedruckten Dokumente an die Bindeeinheit (14, 24) zu liefern, wobei das Steuermodul (45) außerdem vorgesehen ist, um die Steuerung des Druckens und die Synchronisierung des Transports der Dokumente in Abhängigkeit von vom Computer für den allgemeinen Gebrauch (10, 20) empfangenen Befehlen sicherzustellen.

14. System nach Anspruch 11, **dadurch gekennzeichnet, daß** die Bindeeinheit ein Sammelmodul (50), das mit einem Dokumenteneingang (49) verbunden ist, welcher dazu bestimmt ist, mit dem Dokumentenausgang (39) der digitalen Bilderzeugungseinrichtung zusammenzuwirken, das Heftmodul (52) zum Heften der verschiedenen, eine Einzelbroschüre bildenden Dokumente sowie ein Verbindungsmodul (58), um die verschiedenen, die zu bindende Broschüre bildenden Einzelbroschüren zusammenzufügen, umfaßt, wobei das Steuermodul (60) ferner vorgesehen ist, um die Steuerung und die Synchronisierung dieser verschiedenen Module in Abhängigkeit von vom Computer für den allgemeinen Gebrauch (10, 20) empfangenen Befehlen sicherzustellen.

15. System nach Anspruch 12, **dadurch gekennzeichnet, daß** die Bindeeinheit ferner ein mit dem Heftmodul verbundenes Falzmodul (54) zum Falzen der Dokumente sowie ein an den Ausgang dieses Falzmoduls angeschlossenes Schneidemodul (56) umfaßt, um die Einzelbroschüre vor ihrem Auswerfen zu dem Verbindungsmodul (58) fertig zu stellen.

16. System nach Anspruch 12, **dadurch gekennzeichnet, daß** die Bindeeinheit außerdem ein Modul (53) zum zusätzlichen Zuführen von Vorsatzblättern und/oder unterschiedlichen Einlagen (51) umfaßt.

17. System nach Anspruch 11, **dadurch gekennzeichnet, daß** der Computer für den allgemeinen Gebrauch (20), die digitale Bilderzeugungseinrichtung (22) und die Bindeeinheit (24) untereinander durch ein lokales Kommunikationsnetz (16) verbunden sind.

18. System nach irgendeinem der Ansprüche 11 bis 17, **dadurch gekennzeichnet, daß** die digitale Bilderzeugungseinrichtung (12) und die Bindeeinheit (14) ein gemeinsames Ganzes (15) bilden.
